# EUROPEAN PATENT APPLICATION

(11) **EP 1 849 946 A1**
(43) Date of publication of application: **31.10.2007**
(21) Application number: 06425278.6
(22) Date of filing: 24.04.2006
(51) Int. Cl.: E05D 15/06

(54) **Improved support bracket for wheels of sliding gates**

(71) Applicant: Fratelli Comunello S.p.A., 36027 Rosa (Vicenza) (IT)
(72) Inventor: Comunello, Vittorio, 36027 Rosa (VI) (IT)
(74) Representative: Gallo, Luca

(57) **Abstract**

Improved support bracket for wheels of sliding gates, having a box-shaped body with two facing and parallel plates between which a wheel intended to travel along a rail is pivotably mounted. Each plate has a first flange folded along a plane transverse to the rail with a cavity for accommodating the latter and two second flanges folded horizontally and arranged over those of the other plate and suitable for allowing fixing to the gate.

## Description

### Technical field

The present invention relates to an improved support bracket for wheels of sliding gates.

The support bracket in question is advantageously intended to be mounted on the frames of sliding gates so as to guide the movement of the latter between an open position and a closed position by means of the engagement of the wheels on special rails.

### Background art

At present as is known, numerous different designs of support brackets for gate wheels are available commercially, said brackets generally being obtained by means of varyingly shaped plates which are folded or welded so as to form a fork-shaped body to be fixed onto the bottom of the gate.

The support bracket described in Japanese patent JP 2000204864 is known, for example, said bracket being obtained by means of a fork-shaped plate provided with an upper horizontal wall and parallel side walls which are folded downwards at right angles from the upper wall. A wheel having an annular recess able to engage with a rail is pivotably mounted between the two flanges. The upper wall has, associated with it, fixing means for securing the support bracket to a bottom cross member of the gate in a position projecting downwards or inset inside it.

This design has, in practice, proved to be not without drawbacks.

One drawback consists in the fact that, unless inset seats for receiving the support bracket which are very deep and difficult to use are formed inside the cross member of the gate, the bracket, once mounted, protrudes excessively from underneath the gate, creating a gap between gate and rail which is aesthetically unattractive and operationally dangerous.

Another constructional drawback arises from the fact that the fork-shaped plate in the form of a single body is difficult to assemble with the pin and the wheel in order to form the finished assembly.

Another drawback, which is common to most support brackets for gate wheels present on the market consists in the lack of suitable measures for preventing the occurrence of accidents. During use, the wheel is exposed at the front of the bracket with the dangerous consequence that, during movement of the gate, a foot or a portion of a garment may accidentally get caught inside the gap.

A further drawback which is common to many designs of support brackets for gates is that they are unable to prevent in a sufficient reliable manner the possibility of derailment, for example due to strong gusts of wind.

In particular, in order to avoid this latter drawback, very complex designs, for example described in the Japanese patent JP 2000213263, have been studied, said designs envisaging the use of a central support wheel for the gate and two side wheels rotating about a vertical axis and engaging inside guides arranged on the two sides of the gate.

This design is excessively complex and difficult to realise.

There therefore exists a widespread need within the market to produce a support bracket which satisfies the abovementioned safety requirements in the form of a product which from can be manufactured in a simple and low-cost manner.

### Disclosure of the invention

The main object of the present invention is therefore to eliminate the drawbacks of the support brackets of the known type mentioned above, by providing an improved support bracket for wheels of sliding gates, which is operationally entirely safe and effectively able to ensure a high degree of protection against accidents.

Another object of the present invention is to provide a support bracket for wheels of sliding gates which has optimum anti-derailment properties.

A further object of the present invention is to provide a support bracket for wheels of sliding gates which is constructionally simple, low cost and operationally entirely reliable.

A further object of the present invention is to provide a method for manufacturing the support bracket in question for wheels of sliding gates which is low cost and simple to produce.

These objects, together with others, are all achieved in particular by an improved support bracket for wheels of sliding gates, having a longitudinal extension in the direction of movement. According to the present invention, the support bracket is characterized in that it comprises a box-shaped body provided with two facing and parallel plates each defining a plane lying substantially parallel to the direction of forward movement, and a wheel which is intended to travel on a rail, arranged between the parallel plates and free to rotate about a pin having an axis transverse to the direction of forward movement, supported by the plates and arranged so as to mechanically connect together the plates; each plate is provided in the form of a single body with at least one first flange folded at right angles with respect to the lie of said plate, transversely with respect to said direction of forward movement, and having a cavity for accommodating the rail.

### Brief description of the drawings

The technical features of the invention, in accordance with the abovementioned objects, may be clearly determined from the contents of the claims indicated below and the advantages thereof will emerge more clearly from the detailed description which follows, provided with reference to the accompanying drawings which show two embodiments thereof purely by way of a non-limiting example, in which:
FIG. 1 shows a perspective schematic view of a first example of a support bracket for wheels of sliding gates according to the present invention;
FIG. 2 shows a front view of the support bracket according to Figure 1;
FIG. 3 shows a side view of the support bracket according to Fig. 1;
FIG. 4 shows a cross-sectional view of the support bracket according to the present invention, along the line A-A of Figure 3;
FIG. 5 shows an enlarged detail of the support bracket according to Figure 1, relating to a component part consisting of the plate to be folded;
FIGS. 6, 7 and 8 show a side, end and top plan view, respectively, of the plate according to Figure 5 folded;
FIG. 9 shows a perspective schematic view of a second example of a support bracket for wheels of sliding gates according to the present invention;
FIG. 10 shows a front view of the support bracket according to Figure 9;
FIG. 11 shows a side view of the support bracket according to Figure 9;
FIG. 12 shows a cross-sectional view of the support bracket according to the present invention, along the line B-B of Figure 11;
FIG. 13 shows an enlarged detail of the support bracket according to Figure 9, relating to a component part consisting of a plate to be folded;
FIGS. 14, 15 show a side, end and perspective view of the plate according to Figure 13;
FIGS. 16, 17 show a perspective view of the plates according to Figures 1 and 9, mounted on a gate which is only partially shown.

### Detailed description of a preferred example of embodiment

With reference to the attached drawings, 1 denotes overall the support bracket for gate wheels according to the present invention.

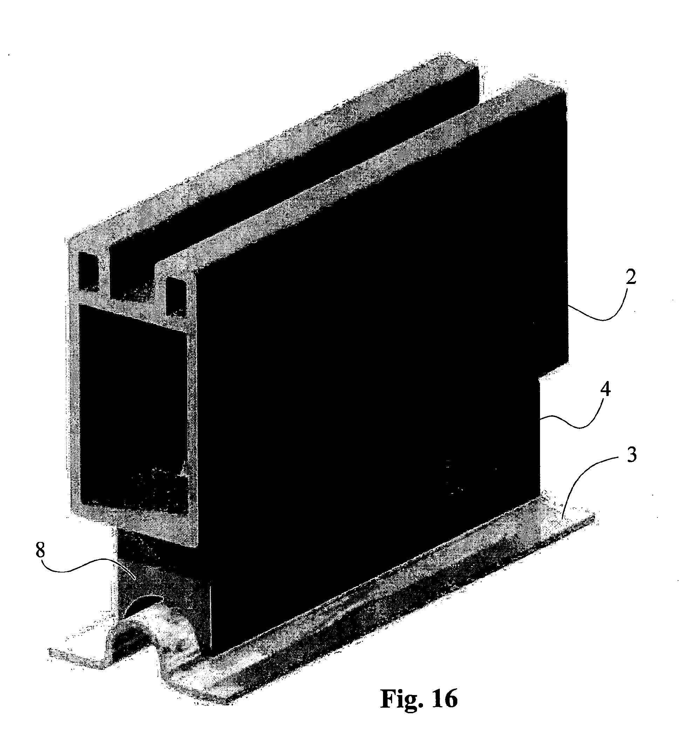

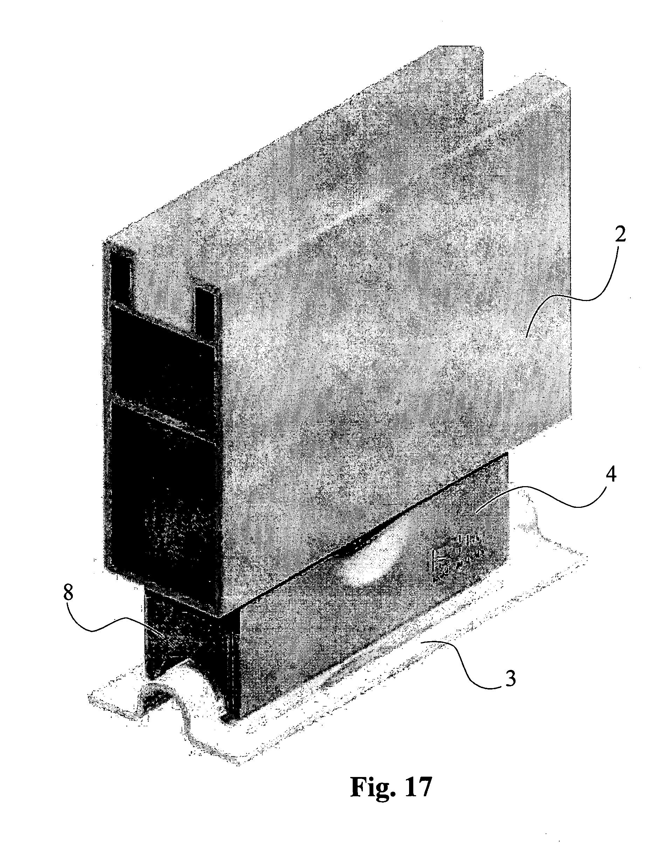

It is intended to be rigidly mounted underneath a gate 2 (a portion of which is shown in Figures 16 and 17) so at allow the latter to travel in an entirely conventional manner on a rail 3.

The connection may be performed in a manner known per se, for example, by means screwing or by means of welding.

With reference to the examples shown in the accompanying figures, the support bracket has a longitudinal extension in the direction of movement Y parallel to the rail 3 and is formed by a box-shaped body which is obtained by folding a first plate 4 and a second plate 4' made of sheet metal.

In greater detail, the two plates 4, 4' are arranged facing and parallel to each other, each defining a plane lying substantially parallel to the direction of forward movement Y of the gate.

A wheel 5 is arranged between the two plates and has advantageously a concave annular profile (see Fig. 2) for rotating in a guided manner engaged on top of the projecting portion 3' of the rail 3, with respect to which it is has an approximately matching shape.

The wheel 5 is free to rotate about a pin 6 having an axis Z which is transverse to the direction of forward movement Y of the gate.

The pin 6 is supported at its ends by the two plates 4, 4' in a manner conventional per se. In particular, it is mounted inside central through-holes 7 formed in the two plates and is fixed in position by means of screwing means.

The pin 6 is arranged so as to mechanically connect together the two plates 4, 4' and advantageously is the sole means for interconnecting the said plates.

In order to limit the width of the support bracket 1, allowing easy insertion thereof inside the fixing seat formed in the gate 2, the through-holes for fixing the pin are formed in the region of depressions in the plates 4, 4'.

Each plate 4, 4' has a first flange 8 which is folded at right angles with respect to the plane of lie of the said plate and is oriented transversely with respect to the direction of forward movement Y.

The bottom edge 9 of the plate 4, 4' is provided with an arched cavity 20 for accommodating the rail 3, which preferably has a shape matching that of the latter.

Preferably, each plate 4, 4' is also provided with two second flanges, which will be identified below as front flange 10 and rear flange 10' without any particular reference to the direction of movement of the gate. These flanges 10, 10' form a fold at right-angles with the plane of lie of the plates above the first flanges 8.

In greater detail, the second front flange 10 of the first plate 4 is arranged over - preferably so as to rest thereon - the upper edge 11 of the first flange 8 of the same first plate 4 and has, arranged above it, the second rear flange 10' of the second plate 4'. Similarly, the rear flange 10' of the first plate 4 is arranged over the front flange 10 of the second plate 4' which is in turn arranged over the edge 11 of the first flange 8 of the same second plate 4'.

In so doing, the first and the second flanges 8, 10, 10' form, at the two ends of the support bracket, a step which is substantially uninterrupted between the surfaces which define it.

It is important to note that the two plates assembled facing each other are identical to each other such that the production and warehouse storage costs are reduced considerably.

Moreover, it is particularly easy to fix the plates 4, 4' together by means of insertion of the pin 6 once the plates 4, 4' are arranged alongside each other.

Since the second front flange 10 of one plate is positioned underneath the second rear flange 10' of the other plate, this latter flange 10' is folded at a height from the bottom edge 9 of the plate slightly greater than the height at which the second front flange 10 is folded, this in order to take into account the thickness of this latter second front flange and allow the correct overlapping arrangement of the second flanges, ensuring that they are coplanar at the two ends of the support bracket 1.

The two second rear flanges 10' lie advantageously in horizontal planes and are provided with through-holes for fixing underneath the gate 2.

The bottom edge 9 of the plates 4, 4' is positioned at a height such as to hide as far as possible the wheel 5 without, however, rubbing against the rail 3.

Advantageously, this bottom edge 9 has an anti-derailment function in addition to that ensured by the concave shape of the wheel 5 and is extended for this purpose as far as the bottom edge of the latter.

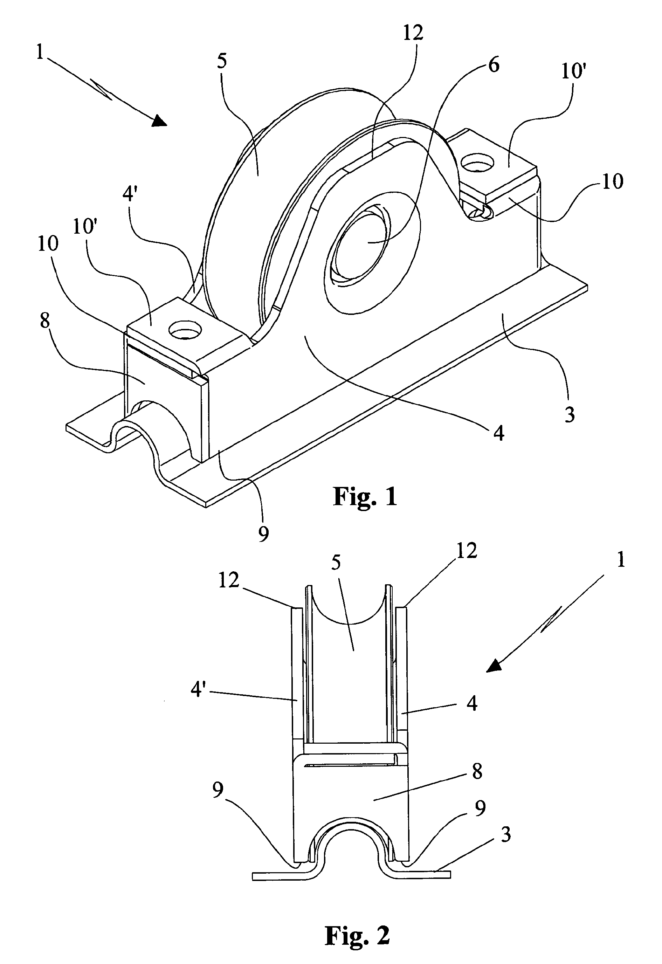

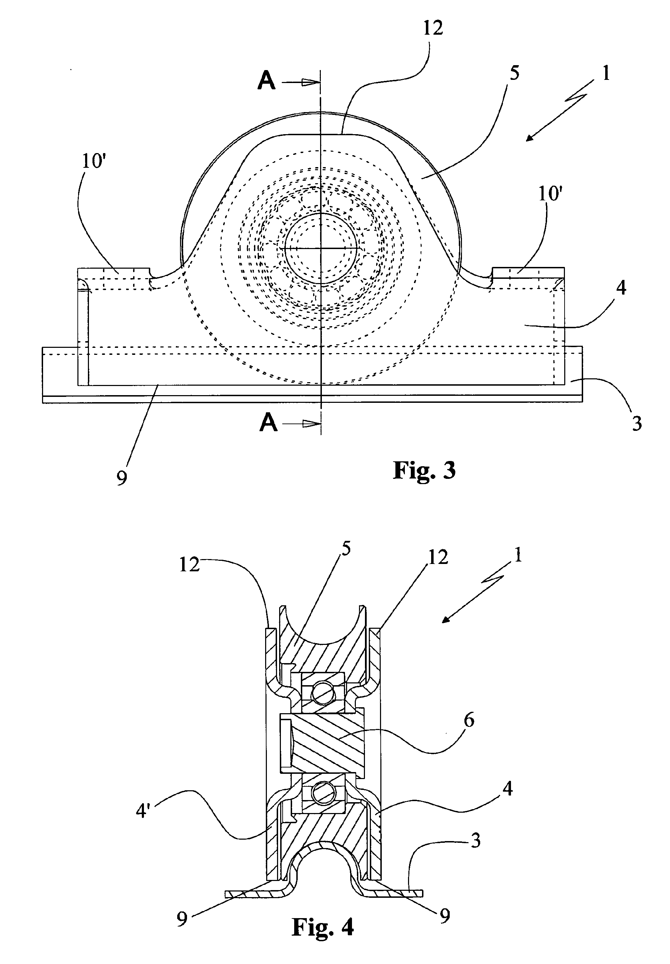

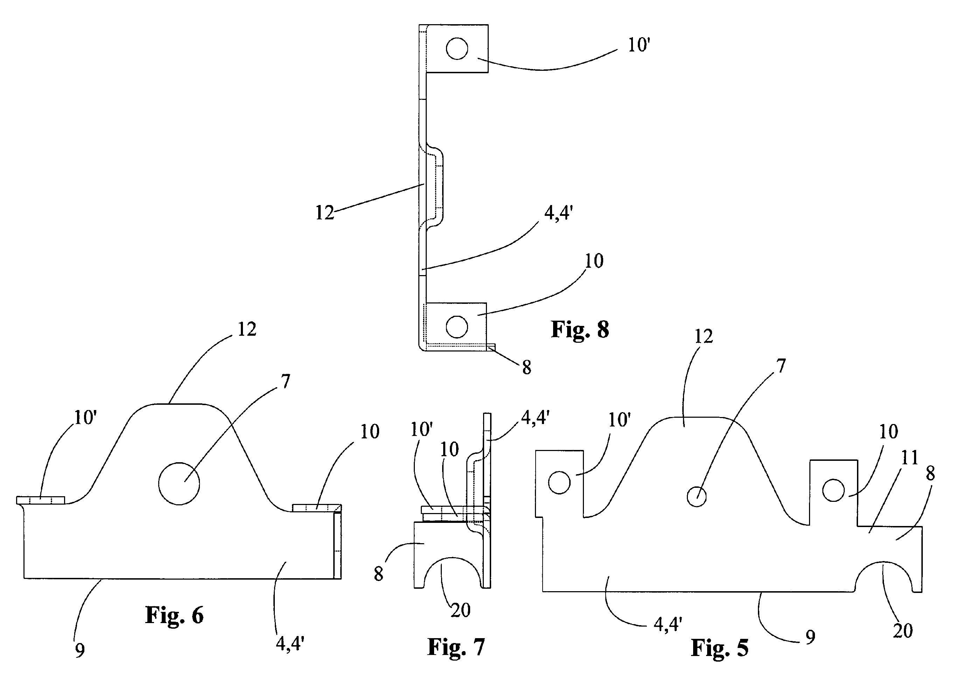

In accordance with the embodiment shown in Figure 1-8, each plate 4, 4' has a central portion with an upper bell-shaped edge 12.

The second flanges 10, 10' are arranged approximately at a height equal to half of the wheel 5 namely preferably slightly underneath its central axis of rotation.

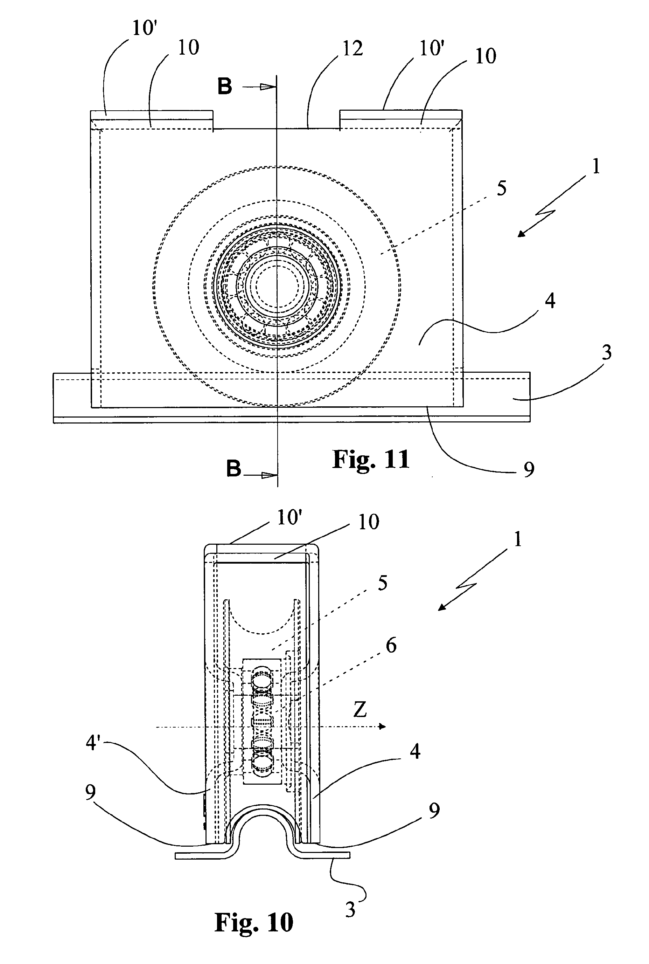

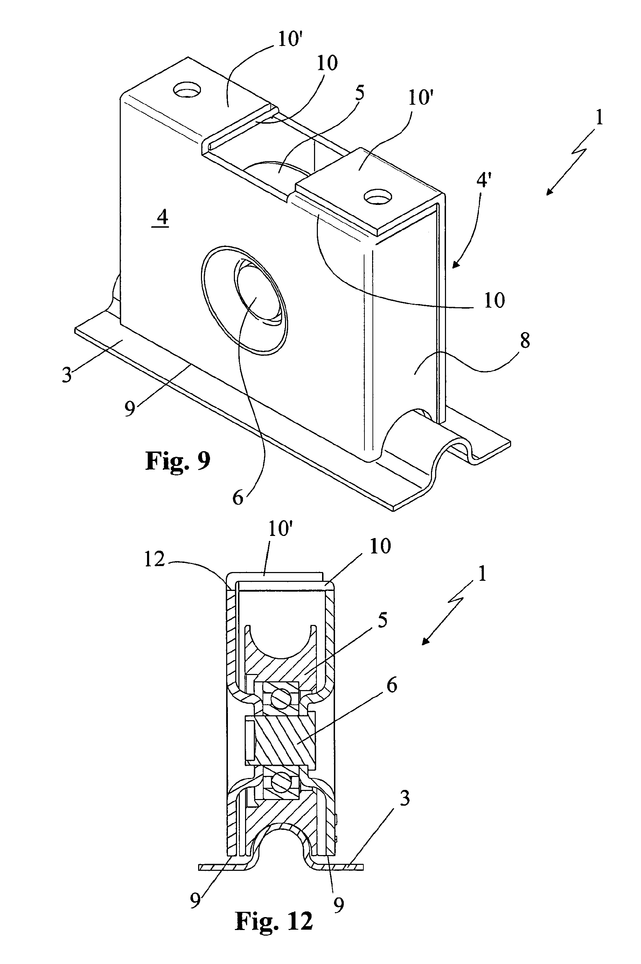

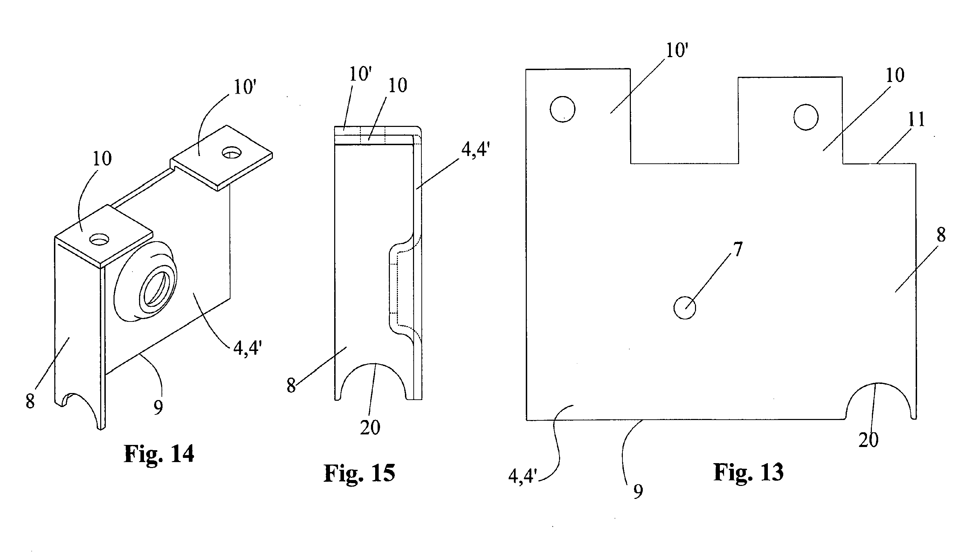

Alternatively, in accordance with the embodiment shown in Figures 9-15, each plate 4, 4' has a central portion with a horizontal upper edge 12 situated substantially at the same height as said second flanges 10, 10'.

The present invention also relates to a method for manufacturing the support bracket 1 described hitherto from a structural point of view.

The method according to the invention will be described hereinbelow using the same reference numbers indicated above.

This manufacturing method comprises a step involving shearing a metallic strip by means of a die which is fed stepwise and with the consequent forming of a shaped flat plate 4, 4'.

During this shearing operation, the following are formed in each plate 4, 4': a through-hole 7, a first flange 8 extending as an extension of the plate in the longitudinal direction Y with the cavity 20 formed in the bottom edge 9, and two second flanges 10, 10' extending at right angles to the longitudinal direction Y from the upper edge 11 of the plate 4, 4'.

During a subsequent folding step, the first flange 8 is folded at right angles to the lie of the plate and to the longitudinal direction Y along the line of connection with the plate, while the second flanges 10, 10' are folded at right angles to the lie of the plate and to said upper edge 11.

The two plates 4, 4' thus obtained are then, via a joining step, positioned facing each other with the wheel 5 arranged in between so that the central through-holes 7 are aligned with the axis of the wheel 5. The depressions provided on the outer sides of the plates produce corresponding conical projections on the inner side which allow easy centring of the wheel 5 during assembly, being inserted partially inside the two hollows situated on the two sides of the wheel 5.

The joined plates 4, 4' are then fastened together during a suitable fixing step so as to form the support bracket as a single unit by means of the insertion of the pin 6 inside the central hole 7 of the plates 4, 4' along the axis of the wheel 5 and consequent fixing of the said pin at the ends on the plates by means of screwing means, advantageously consisting of a screw and a nut.

During the folding step, the second front flange 10 is arranged on top in particular so as to rest on the upper edge of the first flange 8. The other second flange 10' (rear flange) of the facing plate is then arranged on top of the same second flange 10 during the subsequent joining step.

The invention thus conceived therefore achieves the predefined objects.

Advantageously, the support bracket according to the present invention is particularly safe owing to the first flange 8 situated transversely with respect to the rail and with the cavity which follows its profile closely. In fact, the very small gap existing between this flange 8 and the profile of the rail drastically reduces the possibility of a foot, garment or other object being crushed by the wheel.

Moreover, during the forward movement of the gate 2, the flange 8 automatically performs cleaning of the rail 3, preventing the wheel from performing an awkward jerking movement and from being damaged.

The bottom edges 9 of the plates 4, 4' which retain the rail 3 on the two sides also perform the important function of preventing derailment of the gate, helping ensure safe use thereof.

The idea forming the basis of the present invention is also particularly based on the simplicity of manufacturing the support bracket 1 from two shaped plates 4, 4' which can be easily obtained by means of easy shearing and folding operations and can be quickly assembled by means of the simple arrangement of the wheel 5 in between and simple fixing together by means of the pin 6.

Obviously the support bracket according to the invention may also assume, in its practical embodiment, forms and configuration which are different from those illustrated above without thereby departing from the present scope of protection.

Moreover, all the details may be replaced by technically equivalent parts and the dimensions, forms and materials used may be of any nature according to requirements.

## Claims

1. Improved support bracket for wheels of sliding gates, having a longitudinal extension in the direction of movement, **characterized in that** it comprises:
- a box-shaped body provided with two facing and parallel plates each defining a plane lying substantially parallel to said direction of forward movement;
- at least one wheel which is intended to travel on a rail, arranged between said parallel plates and free to rotate about a pin having an axis transverse to said direction of forward movement, supported by said plates and arranged so as to mechanical connect together said plates;
- each plate being provided in the form of a single body with at least one first flange folded at right angles with respect to said plate, transversely with respect to said direction of forward movement, and provided with a cavity for accommodating said rail.

2. Support bracket for wheels according to Claim 1, **characterized in that** each plate is provided in the form of a single body with at least one second flange which is folded at right angles to said plate, in particular defining a horizontal plane, and which can be mechanically associated with fixing means for rigidly connecting the support bracket to the gate.

3. Support bracket for wheels according to Claim 1, **characterized in that** each plate is provided in the form of a single body with two said second flanges, i.e. a front flange and a rear flange, which are folded at right angles to the plate at different heights so as to allow the overlapping arrangement with the corresponding flange of the facing plate.

4. Support bracket for wheels according to Claim 1, **characterized in that** said cavity is shaped in a matching manner with respect to the rail, in particular has a shape which is arched, in particular so as to match the shape of the rail.

5. Support bracket for wheels according to Claim 1, **characterized in that** said plate has a central portion delimited below by a bottom edge extending substantially as far as the bottom profile of the wheel.

6. Support bracket for wheels according to Claim 1, **characterized in that** said plate has a central portion delimited above by an upper bell-shaped edge.

7. Support bracket for wheels according to Claim 1, **characterized in that** said second flanges are arranged at a height lower than the top of the wheel and in particular underneath its central axis of rotation.

8. Support bracket for wheels according to Claim 1, **characterized in that** said plate has a central portion delimited above by a horizontal upper edge situated substantially at the same height as said second flanges.

9. Support bracket for wheels according to Claim 1, **characterized in that** said facing plates are provided with through-holes for fixing the pin, which are arranged inside depressions.

10. Support bracket for wheels according to any one of the preceding claims, **characterized in that** said facing plates are identical to each other.

11. Support bracket for wheels according to Claim 1, **characterized in that** said first and said second flanges form an uninterrupted step.

12. Support bracket for wheels according to Claim 1, **characterized in that** at least one of said second flanges rests on the upper edge of at least one of said first flanges.

13. Method for manufacturing the improved support bracket for wheels of gates according to any one of the preceding claims, **characterized in that** it comprises the following operating steps:
- a step involving shearing a metal strip by means of a die fed stepwise with consequent forming of a shaped flat plate provided with a central hole, with at least one first flange extending as an extension of the plate in a longitudinal direction and having a cavity on the bottom edge, and with at least one second flange extending at right angles to said longitudinal direction from an upper edge of the plate;
- a step involving folding said first and second flanges at right angles to said longitudinal direction and to said upper edge, respectively;
- a step involving joining together two said plates, thus obtained, facing each other with a wheel arranged in between and with the central holes arranged coaxially aligned with the axis of the wheel;
- a step involving fixing the plates and the wheel together so as to form the said support bracket as a single unit by means of insertion of a pin inside the central hole of the plates along the axis of the wheel and fixing to the ends of the facing plates.

14. Method according to Claim 13, in which two second flanges extending in a parallel manner from said upper edge are formed on said flange during said shearing step, at least one said second flange of each plate being arranged during said folding step so as to rest on the upper edge of said first flange and having, arranged over it, during said joining step, the other second flange of the facing plate.

## Amended claims

### Amended claims in accordance with Rule 86(2) EPC.

**1.** Improved support bracket for wheels of sliding gates, having a longitudinal extension in the direction of movement, comprising:
- a box-shaped body provided with two facing and parallel plates each defining a plane lying substantially parallel to said direction of forward movement;
- at least one wheel which is intended to travel on a rail, arranged between said parallel plates and free to rotate about a pin having an axis transverse to said direction of forward movement, supported by said plates and arranged so as to mechanical connect together said plates;
**characterized in that**:
- each plate is provided in the form of a single body with at least
- one first flange folded at right angles with respect to said plate, transversely with respect to said direction of forward movement, and provided with a cavity for accommodating said rail which follows the profile of the cavity closely;
- and with at least one second flange which is folded at right angles to said plate, in particular defining a horizontal plane, and which can be mechanically associated with fixing means for rigidly connecting the support bracket to the gate;
- the first and the second flanges forming, at the two ends of the support bracket, a step which is substantially uninterrupted between the surfaces which define it.

**2.** Support bracket for wheels according to Claim 1, **characterized in that** each plate is provided in the form of a single body with two said second flanges, i.e. a front flange and a rear flange, which are folded at right angles to the plate at different heights so as to allow the overlapping arrangement with the corresponding flange of the facing plate.

**3.** Support bracket for wheels according to Claim 1, **characterized in that** said cavity is shaped in a matching manner with respect to the rail, in particular has a shape which is arched, in particular so as to match the shape of the rail.

**4.** Support bracket for wheels according to Claim 1, **characterized in that** said plate has a central portion delimited below by a bottom edge extending substantially as far as the bottom profile of the wheel.

**5.** Support bracket for wheels according to Claim 1, **characterized in that** said plate has a central portion delimited above by an upper bell-shaped edge.

**6.** Support bracket for wheels according to Claim 1,
**characterized in that** said second flanges are arranged at a height lower than the top of the wheel and in particular underneath its central axis of rotation.

**7.** Support bracket for wheels according to Claim 1, **characterized in that** said plate has a central portion delimited above by a horizontal upper edge situated substantially at the same height as said second flanges.

**8.** Support bracket for wheels according to Claim 1, **characterized in that** said facing plates are provided with through-holes for fixing the pin, which are arranged inside depressions.

**9.** Support bracket for wheels according to any one of the preceding claims, **characterized in that** said facing plates are identical to each other.

**10.** Support bracket for wheels according to Claim 1, **characterized in that** said first and said second flanges form an uninterrupted step.

**11.** Support bracket for wheels according to Claim 1, **characterized in that** at least one of said second flanges rests on the upper edge of at least one of said first flanges.

**12.** Method for manufacturing the improved support bracket for wheels of gates according to any one of the preceding claims, which comprises the following operating steps:
- a step involving shearing a metal strip by means of a die fed stepwise with consequent forming of a shaped flat plate provided with a central hole, with at least one first flange extending as an extension of the plate in a longitudinal direction and having a cavity on the bottom edge, and with at least one second flange extending at right angles to said longitudinal direction from an upper edge of the plate;
- a step involving folding said first and second flanges at right angles to said longitudinal direction and to said upper edge, respectively;
- a step involving joining together two said plates, thus obtained, facing each other with a wheel arranged in between and with the central holes arranged coaxially aligned with the axis of the wheel;
- a step involving fixing the plates and the wheel together so as to form the said support bracket as a single unit by means of insertion of a pin inside the central hole of the plates along the axis of the wheel and fixing to the ends of the facing plates;
the method being **characterized in that**
two second flanges extending in a parallel manner from said upper edge are formed on said flange during said shearing step, at least one said second flange of each plate being arranged during said folding step so as to rest on the upper edge of said first flange and having, arranged over it, during said joining step, the other second flange of the facing plate.
